# EUROPEAN PATENT APPLICATION

(11) **EP 4 456 199 A1**
(43) Date of publication of application: **30.10.2024**
(21) Application number: 22910766.9
(22) Date of filing: 28.11.2022
(51) Int. Cl.: H01M 4/62, H01M 4/131, H01M 4/1391, H01M 4/36, H01M 4/505, H01M 4/525

(54) **POSITIVE ELECTRODE FOR SECONDARY BATTERY, METHOD FOR MANUFACTURING SAME, AND SECONDARY BATTERY**

(30) Priority: 24.12.2021 JP 2021211408
(71) Applicant: Panasonic Intellectual Property Management Co., Ltd., Kadoma-shi, Osaka 571-0057 (JP)
(72) Inventor: SHIRAKAMI, Atsuro, Kadoma-shi, Osaka 571-0057 (JP); OKI, Yukihiro, Kadoma-shi, Osaka 571-0057 (JP); HASEGAWA, Chisaki, Kadoma-shi, Osaka 571-0057 (JP)
(74) Representative: Novagraaf International SA
(86) International application number: PCT/JP2022/043753
(87) International publication number: WO 2023/120048

(57) **Abstract**

A positive electrode for a secondary battery including a positive electrode current collector, and a positive electrode active material layer supported on the positive electrode current collector, in which the positive electrode active material layer contains active material particles, a binder, and an organic phosphorus compound that is solid at room temperature. The organic phosphorus compound is, for example, selected from the group consisting of a phosphonic acid and a phosphonic acid ester each including an alkyl group having 1 to 17 carbon atoms.

## Description

### [Technical Field]

The present disclosure mainly relates to a positive electrode for a secondary battery.

### [Background Art]

In a secondary battery including a liquid electrolyte, the higher the upper limit voltage is, the more the amount of gas generated through the decomposition reaction of the liquid electrolyte tends to increase, and the performance of the secondary battery tends to deteriorate. The upper limit voltage is set as a voltage in a fully charged state (end-of-charge voltage), and corresponds to a state of charge (SOC) of 100%.

Patent Literature 1 says that by using a positive electrode active material having a surface film formed of at least one selected from a specific phosphonic acid ester and a specific phosphorous acid triester, gas generation associated with charging and discharging can be suppressed.

Patent Literature 2 says that by using a liquid electrolyte including a solvent containing a specific phosphonic acid compound, the chemical stability of the liquid electrolyte is improved, and the decomposition reaction of the liquid electrolyte can be suppressed during charging and discharging.

Patent Literature 3 proposes a battery that includes a positive electrode including a positive electrode active material, a negative electrode including a lithium-transition metal compound having a spinel structure as a negative electrode active material, and a liquid electrolyte containing a solvent and an electrolyte salt, in which at least one of the positive electrode and the liquid electrolyte contains a phosphorus compound having a P-OH structure.

### [Citation List]

### [Patent Literature]

Patent Literature 1: International Publication WO2017/126276
Patent Literature 2: Japanese Laid-Open Patent Publication No. 2009-224258
Patent Literature 3: Japanese Laid-Open Patent Publication No. 2013-152825

### [Summary of Invention]

### [Technical Problem]

However, merely by forming a surface film on the positive electrode active material, the surface film may be damaged due to the oxidative decomposition of the film itself and other causes. As the upper limit voltage of the secondary battery is set higher (e.g., above 4.3 V), the oxidative decomposition of the surface film becomes more likely to occur. According to the conventional proposals, therefore, the effect of suppressing the decomposition reaction of the liquid electrolyte cannot be sustained long term.

In the case of adding a phosphonic acid compound or a phosphorus compound having a P-OH structure to the liquid electrolyte, there is a limitation on the content of the phosphorus compound that can be dissolved in the liquid electrolyte. It is difficult to sufficiently increase the content of the phosphorus compound in the liquid electrolyte, and in this case too, the effect of suppressing the decomposition reaction of the liquid electrolyte cannot be sustained long term.

### [Solution to Problem]

One aspect of the present disclosure relates to a positive electrode for a secondary battery, including: a positive electrode current collector; and a positive electrode active material layer supported on the positive electrode current collector, wherein the positive electrode active material layer contains active material particles, a binder, and an organic phosphorus compound that is solid at room temperature, the organic phosphorus compound is represented by a general formula (1): 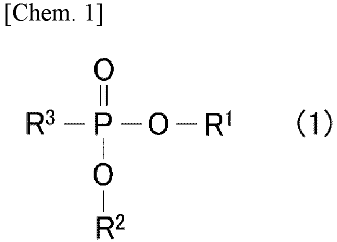 in the general formula (1), R¹ and R² are each independently hydrogen atom or an alkyl group having 1 to 2 carbon atoms, and R³ is an alkyl group having 1 to 17 carbon atoms.

Another aspect of the present disclosure relates to a secondary battery, including: the above-described positive electrode for a secondary battery; a negative electrode; a liquid electrolyte; and a separator interposed between the positive electrode and the negative electrode.

Further another aspect of the present disclosure relates to a method for producing a positive electrode for a secondary battery, the method including steps of: preparing a positive electrode slurry containing active material particles, a binder, an organic phosphorus compound that is solid at room temperature, and a dispersion medium in a liquid form; preparing a positive electrode current collector; applying the positive electrode slurry onto a surface of the positive electrode current collector, to form an applied film; drying the applied film, to form an unrolled layer; and rolling the unrolled layer, to form a positive electrode active material layer, wherein the organic phosphorus compound is represented by a general formula (1): 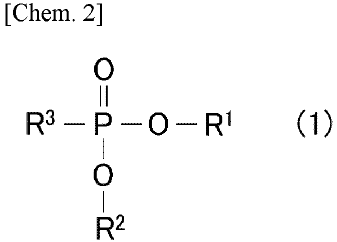 in the general formula (1), R¹ and R² are each independently hydrogen atom or an alkyl group having 1 to 2 carbon atoms, and R³ is an alkyl group having 1 to 17 carbon atoms, and the dispersion medium includes an organic solvent.

### [Advantageous Effects of Invention]

According to the present disclosure, even when the upper limit voltage of the secondary battery is high, a sufficient effect of suppressing the decomposition reaction of the electrolyte can be sustainably obtained.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

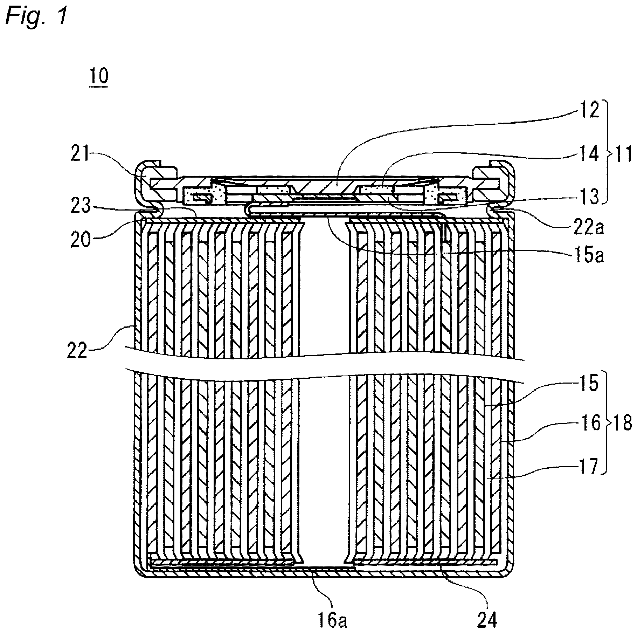

[FIG. 1] A schematic longitudinal cross-sectional view of the internal structure of a secondary battery according to an embodiment of the present disclosure.

### [Description of Embodiments]

Embodiments of a positive electrode for a secondary battery according to the present disclosure and a secondary battery using the positive electrode will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, when referring to "a range of a numerical value A to a numerical value B," the range includes the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit.

The present disclosure encompasses a combination of matters recited in any two or more claims selected from plural claims in the appended claims. In other words, as long as no technical contradiction arises, matters recited in any two or more claims selected from plural claims in the appended claims can be combined.

### A. Positive electrode for secondary battery

A positive electrode for a secondary battery according to an embodiment of the present disclosure includes a positive electrode current collector, and a positive electrode active material layer supported on the positive electrode current collector. The positive electrode active material layer is formed on a surface of the positive electrode current collector.

### [Positive electrode current collector]

The positive electrode current collector is constituted of a sheet of conductive material. The positive electrode current collector may be a non-porous conductive substrate (metal foil, etc.) or a porous conductive substrate (mesh, net, punched sheet, etc.).

### [Positive electrode active material layer]

The positive electrode active material layer is supported on one or both surfaces of the positive electrode current collector. The positive electrode active material layer, usually, is a positive electrode mixture layer constituted of a positive electrode mixture and is in the form of a membrane or a film. The positive electrode mixture includes, as essential components, active material particles (particles of a positive electrode active material), a binder, and an organic phosphorus compound that is solid at room temperature. The active material particles may include, for example, a lithium-containing transition metal oxide. The binder may include, for example, at least one selected from the group consisting of a fluorocarbon resin and a hydrogenated nitrile butadiene rubber.

The "room temperature" as described herein means a temperature of 20 °C or higher and 30 °C or lower. The organic phosphorus compound that is solid at room temperature is represented by a general formula (1):

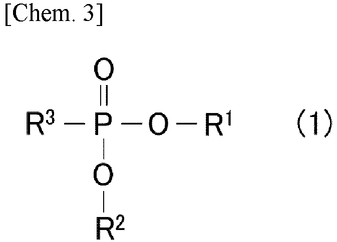

In the general formula (1), R¹ and R² are each independently hydrogen atom or an alkyl group having 1 to 2 carbon atoms, and R³ is an alkyl group having 1 to 17 carbon atoms.

The organic phosphorus compound represented by the general formula (1) (hereinafter sometimes referred to as an "organic phosphorus compound PR") is stable even in a high voltage environment, despite being contained in the positive electrode active material layer. In addition, the organic phosphorus compound PR contained in the positive electrode active material layer frequently comes in contact with the active material particles, and is at least partially solid. Therefore, the effect of suppressing the oxidative decomposition of the liquid electrolyte can be sustained longer term.

The organic phosphorus compound PR is partially dissolved in the dispersion medium (e.g., N-methyl-2-pyrrolidone) in the positive electrode slurry used when forming a positive electrode, and covers at least part of the surfaces of the active material particles, which enhances the effect of suppressing the oxidative decomposition of the electrolyte.

On the other hand, in the electrolyte in a secondary battery, the rate of dissolution in a solvent (e.g., carbonic acid ester) is slow, and the dissolution tends to proceed gradually over a long time. Even in the event of damage to the surface film derived from the organic phosphorus compound PR which has initially covered the surfaces of the active material particles, the surface film can be repaired over time. Therefore, even when the upper limit voltage of the secondary battery is set high (e.g., above 4.3 V), a sufficient effect of suppressing the decomposition reaction of the electrolyte can be sustainably obtained.

At least part of the organic phosphorus compound PR may be present in the form of particles having a particle diameter of 0. 1 µm or more and 5 µm or less in the positive electrode active material layer. When the organic phosphorus compound PR has such a particle diameter, it can be said that the organic phosphorus compound PR is excessively contained in the positive electrode active material layer. Since the particulate organic phosphorus compound PR gradually dissolves over a long time, to repair the surfaces of the active material particles over time with a film derived from the organic phosphorus compound PR, the effect of suppressing the electrolyte decomposition reaction can be obtained for longer time. The particle diameter of the organic phosphorus compound PR may be 0.3 µm or more, and may be 1 µm or more. A maximum value of the particle diameter of the organic phosphorus compound PR may be 3 µm or less, and may be 2 µm or less. When the maximum value of the particle diameter is within the above range, the influence on the battery performance can be sufficiently reduced. Here, "particles" mean a concept that includes primary particles, secondary particles, and assemblages of these particles, and includes, in addition to ordinary grains or particles, concepts of aggregation, agglomeration, and the like.

The particle diameter of the organic phosphorus compound PR can be measured, for example, in the following manner.

### (1) Preparation of cross-section sample of positive electrode

First, a positive electrode to be measured is prepared. Next, the positive electrode active material layer and the positive electrode current collector are cut together along the thickness direction of the positive electrode, to form a cross section. At this time, a thermosetting resin may be packed into the positive electrode active material layer, and cured. For example, CP (cross-section polisher) method, FIB (focused ion beam) method, or the like may be used to obtain a cross-section sample of the positive electrode.

The positive electrode to be measured is taken out from a secondary battery with a depth of discharge (DOD) of 90% or more. The depth of discharge (DOD) means a ratio of the amount of electricity discharged to the amount of electricity that a fully charged battery has. The amount of charged electricity (i.e., full charge amount) when a fully discharged battery (DOD = 100%) is charged to a full charge (SOC = 100%, DOD = 0%) is equivalent to the rated capacity. The voltage of a fully charged battery corresponds to the end-of-charge voltage. The voltage of a fully discharged battery corresponds to the end-of-discharge voltage.

### (2) Photographing cross-section sample of positive electrode with scanning electron microscope (SEM)

Next, the cross-section sample is observed with a SEM. The observation with a SEM is performed at low magnification (e.g., 200 times to 1000 times). A SEM image is taken such that a region of 300 µm or more (preferably 400 µm or more) long in the plane direction of the positive electrode active material layer can be observed.

### (3) Elemental analysis by energy dispersive X-ray spectroscopy (EDX)

Elemental analysis by EDX is performed using the SEM image of the cross-section sample. A map of the organic phosphorus compound PR is obtained by extracting a component derived from the organic phosphorus compound PR, from the EDX analysis data of the cross-section sample. From the obtained map, a particle of the organic phosphorus compound PR is identified. The diameter of an equivalent circle having the same area as the area of the specified particle is determined as the particle diameter of the organic phosphorus compound PR.

As for the particles of the organic phosphorus compound PR having a particle diameter of 0.1 µm or more, it suffices when one or more particles are observed, in a field of view of 400 µm² (e.g., 20 µm × 20 µm square), but desirably, three or more, further six or more particles are observed. The larger the number of the particles of the organic phosphorus compound PR having a particle diameter of 0.1 µm or more observed in the above field of view is, the more effectively the effect of suppressing the decomposition of the electrolyte in high voltage environment can be exerted. The upper limit of the number of the particles of the organic phosphorus compound PR having a particle diameter of 0.1 µm or more observed in the above field of view is, for example, 16 or less. Each of the aforementioned numbers may be an average value of the number of the particles of the organic phosphorus compound PR having a particle diameter of 0.1 µm or more counted in a plurality of (e.g., 3 or more) fields of view. The field of view is desirably set in or near the central area of the positive electrode active material layer in the cross-sectional sample.

It suffices when a small amount of the organic phosphorus compound PR is contained in the positive electrode active material layer. The content of the organic phosphorus compound PR in the positive electrode active material layer may be, for example, 0.1 mass% or more and 5 mass% or less, may be 0.2 mass% or more and 3 mass% or less, and may be 0.5 mass% or more and 2 mass% or less. The organic phosphorus compound PR contained in the above content has no significant influence on the battery capacity. Furthermore, the organic phosphorus compound PR contained in the above content can be uniformly dispersed as the particles of above-described appropriate particle diameter into the positive electrode active material layer.

It is desirable that the organic phosphorus compound PR covers part of the surfaces of the active material particles. The organic phosphorus compound PR present on the surfaces of the active material particles is considered to effectively suppress the contact between the electrolyte and the active material particles. Note that the organic phosphorus compound PR present on the surface of the active material particles includes a surface film (reaction product) derived from the organic phosphorus compound PR. This is because when the organic phosphorus compound PR is attached to the surfaces of the active material particles, a chemical reaction can proceed between the organic phosphorus compound PR and the active material particles.

In the organic phosphorus compound PR, R³ may be an alkyl group having 5 to 17 carbon atoms, and may be an alkyl group having 10 to 15 carbon atoms. The organic phosphorus compound PR having such an alkyl group R³ or a surface film derived therefrom has higher stability and remains for long time in the positive electrode active material layer, exerting the effect of suppressing the decomposition reaction of the electrolyte. The organic phosphorus compound PR including an alkyl group R³ having 5 to 17 carbon atoms dissolves in the solvent of the electrolyte at a sufficiently slow rate, and is considered highly effective in repairing the surfaces of the active material particles over time with a film derived from the organic phosphorus compound PR.

### <Production method of positive electrode>

Next, an example of a method of producing a positive electrode for a secondary battery according to an embodiment of the present disclosure will be described.

The production method includes: a step (I) of preparing a positive electrode slurry containing active material particles, a binder, an organic phosphorus compound (organic phosphorus compound PR) that is solid at room temperature (20 °C to 30 °C), and a dispersion medium; a step (II) of preparing a positive electrode current collector; a step (III) of applying the positive electrode slurry onto a surface of the positive electrode current collector, to form an applied film; a step (IV) of drying the applied film, to form an unrolled layer; and a step (V) of rolling the unrolled layer, to form a positive electrode active material layer.

### (I) Slurry preparation step

A positive electrode slurry is prepared by mixing a positive electrode mixture including active material particles, a binder, and an organic phosphorus compound PR, with a liquid dispersion medium, to disperse the mixture into the dispersion medium. The positive electrode mixture may further include another component (e.g., a conductive material). As the liquid dispersion medium, an organic solvent having excellent affinity for both the binder and the organic phosphorus compound PR is used.

The organic solvent is preferably N-methyl-2-pyrrolidone (NMP), but may be an alcohol such as ethanol, an ether such as tetrahydrofuran, an amide such as dimethylformamide, a ketone such as cyclohexanone, and the like.

The organic phosphorus compound PR may be mixed with a dispersion medium in advance to be partially dissolved. For example, particles of the organic phosphorus compound PR having an average particle diameter D1 may be mixed with a dispersion medium, to prepare a liquid dispersion of particles of the organic phosphorus compound PR having an average particle diameter d1 (d1 < D1, or d1 < 0.8D1). This makes it easier to cover at least part of the surfaces of the active material particles with the organic phosphorus compound PR or a film derived therefrom. Here, the average particle diameter is a median diameter (D₅₀) at 50% cumulative volume in a volume-based particle size distribution obtained using a laser diffraction particle size distribution analyzer.

As the binder, at least one selected from the group consisting of a fluorocarbon resin and a hydrogenated nitrile butadiene rubber may be used. Examples of the fluorocarbon resin include polyvinylidene fluoride (PVDF), polytetrafluoroethylene (PTFE), perfluoroalkoxyalkane (PFA), tetrafluoroethylene-hexafluoropropylene copolymer (FEP), and ethylene-tetrafluoroethylene copolymer (ETFE), and vinylidene fluoridehexafluoropropylene copolymer.

### (II) Step of preparing positive electrode current collector

As the positive electrode current collector, a sheet of conductive material (metal foil, mesh, net, punched sheet, etc.) is used. In particular, a metal foil is preferred. Examples of the material of the positive electrode current collector include stainless steel, aluminum, an aluminum alloy, and titanium. The thickness of the positive electrode current collector is not particularly limited, but is, for example, 1 to 50 µm, and may be 5 to 30 µm.

### (III) Step of forming applied film of positive electrode slurry

An applied film is formed by applying the positive electrode slurry onto a surface of the positive electrode current collector. Examples of an apparatus used for applying the positive electrode slurry include a bar coater, a gravure coater, a blade coater, a roll coater, a comma coater, a die coater, and a lip coater.

In the positive electrode slurry applied onto a surface of the positive electrode current collector, it is desirable that at least part of the organic phosphorus compound PR is present in the form of particles having a particle diameter of 0.1 µm or more and 5 µm or less. By this, a positive electrode active material layer containing an organic phosphorus compound PR having a particle diameter of 0.1 µm or more and 5 µm or less can be easily obtained.

### (IV) Step of drying applied film

Next, the applied film is dried to volatilize the dispersion medium, to form an unrolled applied film. By controlling the conditions for drying as appropriate, the organic phosphorus compound PR may be allowed to migrate, together with the dispersion medium, from the positive electrode current collector side to the outermost surface side (i.e., to the separator side). This results in a state where the organic phosphorus compound PR is more distributed on the outermost surface side than on the positive electrode current collector side in the positive electrode active material layer. The oxidative decomposition reaction of the electrolyte is more likely to proceed in a region closer to the outermost surface side of the positive electrode active material layer. This is because, in such a region, the amount of electrolyte flowing therethrough is large. By localizing the organic phosphorus compound PR on the outermost surface side, the effect of suppressing the oxidative decomposition reaction of the electrolyte becomes more remarkable.

### (V) Step of rolling unrolled layer

Next, the unrolled layer is rolled, to form a positive electrode active material layer. The rolling conditions are not particularly limited, but the density of the active material particles (positive electrode active material) in the positive electrode active material layer is, for example, 3.3 g/cm³ or more and 4.0 g/cm³ or less, and may be 3.5 g/cm³ or more and 4.0 g/cm³ or less.

In the case of localizing the organic phosphorus compound PR on the outermost surface side, when the thickness of the positive electrode active material layer is denoted by T, for example, 1.2 ≤ Pt/Pb may be satisfied, where the Pb represents a presence probability of the organic phosphorus compound PR present in a region (hereinafter, sometimes referred to as a "lower layer region") from a surface of the positive electrode current collector to 0.5T in the positive electrode active material layer, and the Pt represents a presence probability of the organic phosphorus compound PR present in a region (hereinafter, sometimes referred to as an "upper layer region") from a position at 0.5T from the surface of the positive electrode current collector to the outermost surface in the positive electrode active material layer.

The Pb and the Pt can be measured by analyzing the cross-section sample of the positive electrode obtained by the method described above using SEM and EDX. Specifically, in a map of the organic phosphorus compound PR obtained from an EDX analysis data of the cross-section sample, the areas occupied by the organic phosphorus compound PR in the lower layer region and in the upper layer region are measured. At this time, all particles of the organic phosphorus compound PR are counted regardless of the particle diameter of the organic phosphorus compound PR. Then, the percentages by area of the organic phosphorus compound PR in the lower layer region and in the upper layer region are regarded as Pb and Pt, respectively. The Pb and Pt are measured in a field of view of 400 µm² (e.g., 20 µm × 20 µm rectangle). The Pb and Pt may be an average value of Pb's and an average value Pt's, respectively, obtained in a plurality of (e.g., three or more) fields of view. The field of view is desirably set in or near the central area of each of the upper layer region and the lower layer region in the cross-sectional sample.

### B. Secondary battery

A secondary battery according to an embodiment of the present disclosure includes the above-described positive electrode for a secondary battery, a negative electrode, a lithium-ion conductive electrolyte, and a separator interposed between the positive electrode and the negative electrode. The lithium-ion conductive electrolyte may be a liquid electrolyte, or a gel or solid electrolyte in which a liquid electrolyte is held in a matrix polymer. The liquid electrolyte may be a nonaqueous liquid electrolyte or an aqueous electrolyte solution. Examples of the secondary battery include: a lithium-ion secondary battery in which a material that reversibly absorbs and releases lithium ions is used as the negative electrode active material; a lithium secondary battery in which lithium metal deposits at the negative electrode during charging, and the lithium metal dissolves during discharging; and a solid-state battery including a gel electrolyte or a solid electrolyte.

In the following, using a lithium-ion secondary battery as an example, the configuration of the secondary battery will be specifically described.

### [Positive electrode]

As the positive electrode, a positive electrode for a secondary battery having the above-described features is used. The positive electrode active material layer is constituted of a positive electrode mixture. The positive electrode mixture includes, as essential components, active material particles (particles of a positive electrode active material), a binder, and an organic phosphorus compound PR, and may also include optional components. The optional components may include a conductive material, a thickener, and the like.

The thickness of the positive electrode active material layer is not particularly limited, but may be, for example, 20 µm or more and 120 µm or less, or 40 µm or more and 80 µm or less. One positive electrode active material layer may be formed of a plurality of layers having different morphologies from each other. For example, two or more layers containing active material particles with different average particle diameters from each other may be laminated, or two or more layers differing in the type or composition of the positive electrode active material from each other may be laminated.

The average particle diameter of the active material particles (particles of the positive electrode active material) is, for example, 3 µm or more and 30 µm or less, and may be 5 µm or more and 25 µm or less. Herein also, the average particle diameter is a median diameter (D₅₀) at 50% cumulative volume in a volume-based particle size distribution obtained using a laser diffraction particle size distribution analyzer. The active material particles may be separated and collected from the positive electrode. The measuring instrument that can be used is, for example, "LA-750", available from Horiba, Ltd. (HORIBA).

The average particle diameter of the active material particles may be measured from the above-described cross-sectional sample of the positive electrode. For example, a SEM image of the cross section is photographed so that 10 or more active material particles are observed, and through image processing, the diameters of equivalent circles having the same areas as the cross sections of 10 or more active material particles are measured respectively, to calculate an average of them as the average particle diameter.

The positive electrode active material constituting the active material particles may include a lithium-containing transition metal oxide. In view of achieving high capacity, it is desirable that the lithium-containing transition metal oxide includes a lithium-nickel oxide (composite oxide N) containing lithium and Ni and having a layered rock-salt type crystal structure. The proportion of the composite oxide N in the positive electrode active material is, for example, 70 mass% or more, may be 90 mass% or more, and may be 95 mass% or more. The proportion of Ni in the metal elements other than Li contained in the composite oxide N may be 50 atom% or more.

The composite oxide N is represented by, for example, a formula (1): Li_{α}Niₓ₁M1ₓ₂M2₍₁₋ₓ₁₋ₓ₂₎O_{2+β}. Here, the element M1 is at least one selected from the group consisting of V, Co, and Mn. The element M2 is at least one selected from the group consisting of Mg, Al, Ca, Ti, Cu, Zn, and Nb. The formula (1) satisfies 0.9 ≤ α ≤ 1.10, -0.05 ≤ β ≤ 0.05, 0.5 ≤ x1 < 1, 0 ≤ x2 ≤ 0.5, and 0 < 1-x1-x2 ≤ 0.5. The value of α increases and decreases during charging and discharging.

The composite oxide N contains Ni, and may further contain at least one selected from the group consisting of Co, Mn, and Al, as the element M1 and the element M2. Co, Mn, and Al contribute to stabilizing the crystal structure of the composite oxide N.

In view of achieving cost reduction and high capacity, the proportion of Co in the metal elements other than Li contained in the composite oxide N is desirably 0 atom% or more and 20 atom% or less, more desirably 0 atom% or more and 15 atom% or less.

The proportion of Mn in the metal elements other than Li may be 30 atom% or less, and may be 20 atom% or less. The proportion of Mn in the metal elements other than Li may be 1 atom% or more, may be 3 atom% or more, and may be 5 atom% or more.

The proportion of Al in the metal elements other than Li may be 10 atom% or less, or 5 atom% or less. The proportion of Al in the metal elements other than Li may be 1 atom% or more, may be 3 atom% or more, and may be 5 atom% or more.

The composite oxide N can be represented by, for example, a formula (2): Li_{α}Ni_{(1-y1-y2-y3-z)}Co_{y1}Mn_{y2}Al_{y3}M_{z}O_{2+β}. The element M is an element other than Li, Ni, Co, Mn, Al, and oxygen, and may be at least one selected from the group consisting of Ti, Zr, Nb, Mo, W, Fe, Zn, B, Si, Mg, Ca, Sr, Sc, and Y The formula (2) satisfies 0.9 ≤ α ≤ 1.10, -0.05 ≤ β ≤ 0.05, 0 ≤ y1 ≤ 0.1, 0 ≤ y2 ≤ 0.2, 0 ≤ y3 ≤ 0.1, and 0 ≤ z ≤ 0.10. The symbol 1-y1-y2-y3-z (= v) representing the atomic ratio of Ni is, for example, 0.8 or more, may be 0.85 or more, and may be 0.90 or more, or 0.95 or more. The symbol v representing the atomic ratio of Ni may be 0.98 or less, may be 0.95 or less.

When the composite oxide N contains Co, the proportion of Co in the metal elements other than Li may be 1.5 atom% or less. By reducing the Co content and by increasing the Ni content in the composite oxide N, the cost advantage can be increased, and a high capacity can be ensured. Mn and/or Al contributes to stabilizing the crystal structure of composite oxide N with reduced Co content.

Examples of the conductive material that can be contained as an optional component in the positive electrode active material layer include carbon nanotubes (CNTs), carbon fibers other than CNTs, and conductive particles (e.g., carbon black, graphite).

### [Negative electrode]

The negative electrode includes at least a negative electrode current collector, and includes, for example, a negative electrode current collector and a negative electrode active material layer. The negative electrode active material layer is supported on one or both surfaces of the negative electrode current collector.

The negative electrode active material layer may be a negative electrode mixture layer constituted of a negative electrode mixture. The negative electrode mixture layer is in the form of a membrane or a film. The negative electrode mixture contains particles of a negative electrode active material as an essential component, and may contain a binder, a conductive agent, a thickener, and the like, as optional components. A lithium metal foil or lithium alloy foil may be attached as a negative electrode active material layer to the negative electrode current collector.

The negative electrode mixture layer can be formed by, for example, applying a negative electrode slurry of a negative electrode mixture containing particles of a negative electrode active material, a binder, and the like dispersed into a dispersion medium, onto a surface of a negative electrode current collector, followed by drying. The dry applied film may be rolled as necessary.

As the negative electrode active material, a material that electrochemically absorbs and releases lithium ions, lithium metal, a lithium alloy, and the like can be used. The material that electrochemically absorbs and releases lithium ions includes, for example, a carbon material, an alloy-type material, and the like. Examples of the carbon material include graphite, graphitizable carbon (soft carbon), and non-graphitizable carbon (hard carbon). Particularly preferred is graphite, which is stable during charging and discharging and whose irreversible capacity is small. As the alloy-type material, a material containing at least one metal capable of forming an alloy with lithium may be used, examples of which include silicon, tin, a silicon alloy, a tin alloy, and a silicon compound. Silicon oxide, tin oxide, and the like may be used.

The alloy-type material containing silicon may be, for example, a composite material including a lithium-ion conductive phase and silicon particles dispersed into the lithium-ion conductive phase. As the lithium-ion conductive phase, for example, a silicon oxide phase, a silicate phase, a carbon phase, and the like can be used. The major component (e.g., 95 to 100 mass%) of the silicon oxide phase can be silicon dioxide. In particular, a composite material constituted of a silicate phase and silicon particles dispersed into the silicate phase is preferred because of its high capacity and low irreversible capacity. Preferred as the silicate phase is a lithium silicate phase (silicate phase containing lithium), which has a small irreversible capacity and exhibits excellent initial charge-discharge efficiency.

The lithium silicate phase is an oxide phase containing lithium (Li), silicon (Si), and oxygen (O), and may contain other elements. The atomic ratio O/Si of O to Si in the lithium silicate phase is, for example, more than 2 and less than 4. Preferably, the O/Si is more than 2 and less than 3. The atomic ratio Li/Si of Li to Si in the lithium silicate phase is, for example, more than 0 and less than 4. The lithium silicate phase can have a composition represented by a formula: Li_{2z}SiO_{2+z}, where 0 < z < 2. The z preferably satisfies 0 < z < 1, more preferably z = 1/2. Examples of the elements other than Li, Si and O that can be contained in the lithium silicate phase include iron (Fe), chromium (Cr), nickel (Ni), manganese (Mn), copper (Cu), molybdenum (Mo), zinc (Zn), and aluminum (Al).

The carbon phase can be composed of, for example, shapeless carbon with low crystallinity (i.e., amorphous carbon). The amorphous carbon may be, for example, a hard carbon, a soft carbon, or others.

The negative electrode current collector may be a non-porous electrically conductive substrate (e.g., metal foil), a porous electrically conductive substrate (e.g., mesh, net, punched sheet), and the like. Example of the material of the negative electrode current collector include stainless steel, nickel, a nickel alloy, copper, and a copper alloy.

### (Binder)

As the binder, for example, a resin material is used. Examples of the binder include polyacrylic acid, a polyacrylate salt, and their derivatives thereof, a fluorocarbon resin, a polyolefin resin, a polyamide resin, a polyimide resin, an acrylic resin, a vinyl resin, and rubber particles. The binder may be used singly, or in combination of two or more kinds.

Examples of the conductive material include carbon nanotubes (CNTs), carbon fibers other than CNTs, and conductive particles (e.g., carbon black, graphite).

Examples of the thickener include: cellulose derivatives (e.g., cellulose ethers), such as carboxymethyl cellulose (CMC) and modified products thereof (including salts, such as Na salt), and methyl cellulose; saponified products of a polymer having a vinyl acetate unit, such as polyvinyl alcohol; and polyethers (e.g., polyalkylene oxide, such as polyethylene oxide).

### [Separator]

The separator is interposed between the positive electrode and the negative electrode. The separator is excellent in ion permeability and has moderate mechanical strength and insulating properties. The separator may be a microporous thin film, a woven fabric, a nonwoven fabric, and the like. The material of the separator may be, for example, polyolefin, such as polypropylene and polyethylene. The separator may have a heat-resistant, electrically-insulating layer as a surface layer on at least one side. The heat-resistant, electrically-insulating layer may contain an inorganic oxide filler as a major component (e.g., 80 mass% or more), or a heat-resistant resin as a major component (e.g., 40 mass% or more). The heat-resistant resin may be a polyamide resin, such as aromatic polyamide (aramid), a polyimide resin, a polyamide imide resin, and the like.

### [Lithium-ion conductive electrolyte]

The lithium-ion conductive electrolyte may be a liquid electrolyte (electrolyte solution), may be a gel electrolyte, and may be a solid electrolyte. The liquid electrolyte is, for example, an electrolyte solution containing a nonaqueous solvent and a lithium salt dissolved in the nonaqueous solvent. The concentration of the lithium salt in the electrolyte solution is, for example, 0.5 mol/L or more and 2 mol/L or less. The electrolyte solution may contain a known additive.

The gel electrolyte contains a lithium salt and a matrix polymer, or contains a lithium salt, a nonaqueous solvent, and a matrix polymer. The matrix polymer may be, for example, a polymer material that absorbs a nonaqueous solvent and turns into a gel. Examples of the polymer material include a fluorocarbon resin, an acrylic resin, a polyether resin, and polyethylene oxide.

The solid electrolyte may be an inorganic solid electrolyte. As the inorganic solid electrolyte, for example, a known material for use in all-solid lithium-ion secondary batteries and the like (e.g., oxide-based solid electrolyte, sulfide-based solid electrolyte, halide-based solid electrolyte) is used.

As the nonaqueous solvent, for example, a cyclic carbonic acid ester, a chain carbonic acid ester, a cyclic carboxylic acid ester, and the like are used. Examples of the cyclic carbonic acid ester include propylene carbonate (PC), and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). The nonaqueous solvent may be used singly, or in combination of two or more kinds.

Examples of the lithium salt include a lithium salt of a chlorine-containing acid (LiClO₄, LiAlCl₄, LiB₁₀Cl₁₀, etc.), a lithium salt of a fluorine-containing acid (LiPF₆, LiBF₄, LiSbF₆, LiAsF₆, LiCF₃SO₃, LiCF₃CO₂, etc.), a lithium salt of a fluorine-containing acid imide (LiN(SO₂F)₂, LiN(CF₃SO₂)₂, LiN(CF₃SO₂)(C₄F₉SO₂), LiN(C₂F₅SO₂)₂, etc.), and a lithium halide (LiCl, LiBr, LiI, etc.). The lithium salt may be used singly, or in combination of two or more kinds.

The secondary battery, for example, has a structure in which an electrode group formed by winding the positive electrode and the negative electrode with the separator interposed therebetween is housed together with the liquid electrolyte in an outer body. Without limited thereto, a different form of electrode group may be adopted. For example, a stacked-type electrode group formed by stacking the positive electrode and the negative electrode with the separator interposed therebetween may be adopted. The form of the battery is also not limited, and may be cylindrical, prismatic, coin, button, or laminate type.

In the following, a structure of a secondary battery will be described with reference to FIG. 1. FIG. 1 is a longitudinal cross-sectional view of a cylindrical nonaqueous secondary battery 10 which is an example of the present embodiment. The present disclosure, however, is not limited to the following configuration.

The secondary battery 10 includes an electrode group 18, a liquid electrolyte (not shown), and a bottomed cylindrical battery can 22 housing them. A sealing assembly 11 is clamped onto the opening of the battery can 22, with a gasket 21 interposed therebetween. This seals the inside of the battery. The sealing assembly 11 includes a valve body 12, a metal plate 13, and an annular insulating member 14 interposed between the valve body 12 and the metal plate 13. The valve body 12 and the metal plate 13 are connected to each other at their respective centers. A positive electrode lead 15a extended from the positive electrode plate 15 is connected to the metal plate 13. Therefore, the valve body 12 functions as a positive external terminal. A negative electrode lead 16a extended from the negative electrode plate 16 is connected to the bottom inner surface of the battery can 22. An annular groove 22a is formed near the open end of the battery can 22. A first insulating plate 23 is placed between one end surface of the electrode group 18 and the annular groove 22a. A second insulating plate 24 is placed between the other end surface of the electrode group 18 and the bottom of the battery can 22. The electrode group 18 is formed of the positive electrode plate 15 and the negative electrode plate 16 wound together, with the separator 17 interposed therebetween.

In the following, the present disclosure will be specifically described with reference to Examples and Comparative Examples. The present disclosure, however, is not limited to the following Examples.

### [Examples]

### «Examples 1 and 2»

Test cells of a lithium-ion secondary battery were fabricated and evaluated according to the following procedure.

### (1) Production of positive electrode

### (I) Slurry preparation step

A positive electrode slurry was prepared by mixing a positive electrode mixture containing 95 parts by mass of active material particles (LiNi_{0.8}Mn_{0.2}O₂), 2.5 parts by mass of polyvinylidene fluoride (PVDF) serving as a binder, 2.5 parts by mass of acetylene black serving as a conductive material, and a predetermined amount of an organic phosphorus compound PR (decylphosphonic acid) (average particle diameter D1 = 3 µm) represented by the following formula: 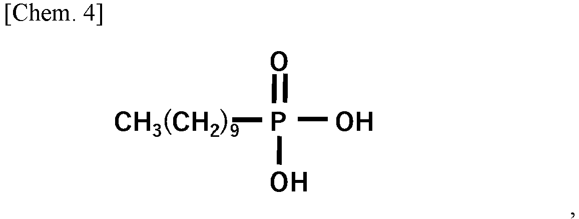 with NMP serving as a liquid dispersion medium, to disperse the positive electrode mixture into the NMP.

The content of the organic phosphorus compound PR (decylphosphonic acid) in the positive electrode mixture (i.e., the content of the organic phosphorus compound PR in the positive electrode active material layer) was set to 0.1 mass% in Example 1, and 1.0 mass% in Example 2. The organic phosphorus compound PR in the positive electrode slurry was not completely dissolved, with partially left present in the positive electrode slurry in the form of particles having a particle diameter of 0.1 µm or more and 5 µm or less (average particle diameter d1 < 3 µm).

### (II) Step of preparing positive electrode current collector

An aluminum foil (thickness 15 µm) was prepared as a positive electrode current collector.

### (III) Step of forming applied film of positive electrode slurry

The positive electrode slurry was applied onto one surface of the positive electrode current collector using a predetermined coater, to form an applied film.

### (IV) Step of drying applied film

Next, the applied film was dried at 80 °C, to volatilize the dispersion medium, to form an unrolled layer.

### (V) Step of rolling unrolled layer

Next, the unrolled layer was rolled, to form a positive electrode active material layer (thickness 95 µm, density 3.6 g/cm³) on one side of the aluminum foil. A positive electrode was thus obtained.

The positive electrode was cut into a predetermined shape, and the positive electrode active material layer was partially peeled off, to obtain a positive electrode for evaluation. The positive electrode was shaped to include a 60 mm × 40 mm power generation region having the positive electrode active material layer, and a 10 mm × 10 mm connection region not having the positive electrode active material layer. A positive electrode tab lead was connected to the connection region.

### (2) Preparation of negative electrode

A negative electrode was produced by attaching a lithium metal foil on one side of an electrolytic copper foil (current collector). The negative electrode was cut in the same shape as the positive electrode. The lithium metal foil on the connection region was peeled off, and then, a negative electrode tab lead was connected to the connection region.

### (3) Preparation of nonaqueous liquid electrolyte

LiPF₆ was dissolved at a concentration of 1 mol/L in a mixed solvent of fluoroethylene carbonate (FEC) and dimethyl carbonate (DMC) in a volume ratio of 20:80, to prepare a liquid electrolyte.

### (4) Fabrication of cell for evaluation

Using the above positive electrode and negative electrode for evaluation, a cell with a design capacity of 114 mAh that is regulated by the negative electrode was fabricated. The positive electrode and the negative electrode were stacked, with a polyethylene separator (thickness 15 µm) interposed between the positive electrode active material layer and the lithium metal foil, to form an electrode group. The electrode group was housed together with 1.2 cm³ of the liquid electrolyte in an envelope-shaped case made of laminated film with both ends open. With the tab lead of each electrode extended from one of openings, the opening was sealed. Thereafter, an operation of leaving the cell to stand for 3 minutes in a reduced pressure of 0.02 MPa and then returning it to atmospheric pressure was performed twice, to impregnate the liquid electrolyte into the positive electrode active material layer. Lastly, the other opening was sealed. In this way, cells A1 and A2 for evaluation of Examples 1 and 2 were obtained. The fabrication of cells for evaluation was performed in a dry air atmosphere with a dew point of -60 °C or lower.

### (5) Cell evaluation

The cells for evaluation were each clamped with a pair of 10 × 5 cm stainless steel (thickness 6 mm) clamps and secured under pressure of 3.2 MPa, and in a 25 °C constant temperature bath, subjected to charging at a constant current of 0.3 It until the voltage reached 4.5 V, and then to discharging at a constant current of 0.3 It to 2.5 V This set of charging and discharging was performed twice. This was followed by charging at a constant current of 0.3 It until the voltage reached 4.5 V Subsequently, the temperature of the constant temperature bath was changed to 55 °C, and a trickle charging was performed at a constant voltage of 4.5 V for 3 days.

Here, measurement was made on the discharge capacity in the 2nd discharging, and the amount of gas generated within the cell during the trickle charging. In Table 1, relative values are shown, with the discharge capacity and the gas generation amount in a laterdescribed cell B1 of Comparative Example 1 each taken as 100%.

### <<Comparative Example 1»

A cell B1 was fabricated and evaluated in the same manner as in Examples 1 and 2, except that in the slurry preparation step (I), no organic phosphorus compound PR was contained in the positive electrode slurry.

### <<Comparative Example 2»

A cell B2 was fabricated and evaluated in the same manner as in Examples 1 and 2, except that in the slurry preparation step (I), no organic phosphorus compound PR was contained in the positive electrode slurry, and 2 mass% of an organic phosphorus compound (tristrimethylsilyl phosphate) was dissolved in the liquid electrolyte.

### <<Comparative Example 3>>

A cell B3 was fabricated and evaluated in the same manner as in Examples 1 and 2, except that in the slurry preparation step (I), no organic phosphorus compound PR was contained in the positive electrode slurry, and 2 mass% of an organic phosphorus compound PR (diethyl methylphosphonate) was dissolved in the liquid electrolyte.

### <<Comparative Example 4»

An organic phosphorus compound PR (decylphosphonic acid) was completely dissolved in a mixed solvent of dimethyl carbonate and ethanol (DMC/EtOH) in a volume ratio of 80:20, to prepare a DMC/EtOH solution with an organic phosphorus compound concentration of 0.5 mass%. The active material particles were immersed in the obtained DMC/EtOH solution (25 °C) for 120 minutes, and then pulled up and dried, to attach the organic phosphorus compound PR to the surfaces of the active material particles. A cell B4 was fabricated and evaluated in the same manner as in Comparative Example 1, except for using the active material particles to which the organic phosphorus compound PR was attached as described above.

**[Table 1]**

| cell | organic phosphorus compound PR (mass%) | | discharge capacity (%) | gas generation amount (%) |
|---|---|---|---|---|
| | in positive electrode active material layer | in liquid electrolyte | | |
| A1 | 0.1 | 0 | 99 | 88 |
| A2 | 1.0 | 0 | 98 | 23 |
| B1 | 0 | 0 | 100 | 100 |
| B2 | 0 | 2 | 99 | 122 |
| B3 | 0 | 2 | 99 | 138 |
| B4 | coating only | 0 | 99 | 65 |

Table 1 shows that in the cells A1 and A2, with almost no influence on the battery performance (discharge capacity), the gas generation amount was reduced. On the other hand, the effect of reducing the gas generation amount was insufficient when the organic phosphorus compound was dissolved in the liquid electrolyte or when the organic phosphorus compound was attached to the surfaces of the active material particles.

### [Industrial Applicability]

A positive electrode for a secondary battery according to the present disclosure and a secondary battery including the positive electrode are useful as main power sources for mobile communication devices, portable electronic devices, electric cars, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

10: secondary battery, 11: sealing assembly, 12: valve body, 13: metal plate, 14: insulating member, 15: positive electrode plate, 15a: positive electrode lead, 16: negative electrode plate, 16a: negative electrode lead, 17: separator, 18: electrode group, 21: gasket, 22: battery can, 22a: groove, 23: first insulating plate, 24: second insulating plate

## Claims

1. A positive electrode for a secondary battery, comprising:
a positive electrode current collector; and a positive electrode active material layer supported on the positive electrode current collector, wherein
the positive electrode active material layer contains active material particles, a binder, and an organic phosphorus compound that is solid at room temperature, and
the organic phosphorus compound is represented by a general formula (1): 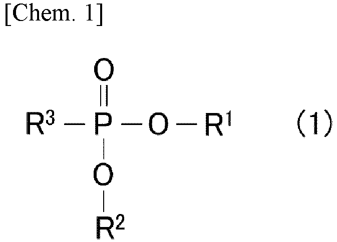
in the general formula (1),
R¹ and R² are each independently hydrogen atom or an alkyl group having 1 to 2 carbon atoms, and
R³ is an alkyl group having 1 to 17 carbon atoms.

2. The positive electrode for a secondary battery according to claim 1, wherein at least part of the organic phosphorus compound is present in a form of particles having a particle diameter of 0.1 µm or more and 5 µm or less in the positive electrode active material layer.

3. The positive electrode for a secondary battery according to claim 1 or 2, wherein a content of the organic phosphorus compound in the positive electrode active material layer is 0.1 mass% or more and 5 mass% or less.

4. The positive electrode for a secondary battery according to any one of claims 1 to 3, wherein part of the organic phosphorus compound covers at least part of surfaces of the active material particles.

5. The positive electrode for a secondary battery according to any one of claims 1 to 4, wherein R³ is an alkyl group having 5 to 17 carbon atoms.

6. The positive electrode for a secondary battery according to any one of claims 1 to 5, wherein
the active material particles contains a lithium-containing transition metal oxide,
the lithium-containing transition metal oxide includes a lithium-nickel oxide containing lithium and Ni and having a layered rock-salt type crystal structure, and
a proportion of Ni in metal elements other than Li contained in the lithium-nickel oxide is 50 atom% or more.

7. The positive electrode for a secondary battery according to claim 6, wherein
the lithium-nickel oxide is represented by
a formula: Li_{α}Niₓ₁M1ₓ₂M2₍₁₋ₓ₁₋ₓ₂₎O_{2+β}, where
the element M1 is at least one selected from the group consisting of V, Co and Mn,
the element M2 is at least one selected from the group consisting of Mg, Al, Ca, Ti, Cu, Zn, and Nb,
0.9 ≤ α≤ 1.10,
-0.05 ≤ β ≤ 0.05,
0.5 ≤ x1 < 1,
0 ≤ x2 ≤ 0.5, and
0 < 1-x1-x2 ≤ 0.5.

8. A secondary battery, comprising: the positive electrode for a secondary battery of any one of claims 1 to 7; a negative electrode; a lithium-ion conductive electrolyte; and a separator interposed between the positive electrode and the negative electrode.

9. A method for producing a positive electrode for a secondary battery, the method comprising steps of:
preparing a positive electrode slurry containing active material particles, a binder, an organic phosphorus compound that is solid at room temperature, and a dispersion medium in a liquid form;
preparing a positive electrode current collector;
applying the positive electrode slurry onto a surface of the positive electrode current collector, to form an applied film;
drying the applied film, to form an unrolled layer; and
rolling the unrolled layer, to form a positive electrode active material layer, wherein
the organic phosphorus compound is represented by a general formula (1): 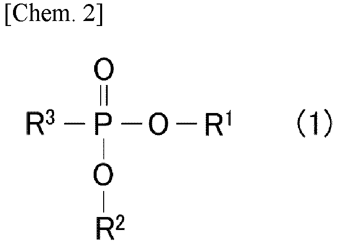
in the general formula (1),
R¹ and R² are each independently hydrogen atom or an alkyl group having 1 to 2 carbon atoms, and
R³ is an alkyl group having 1 to 17 carbon atoms, and
the dispersion medium includes an organic solvent.

10. A method for producing a positive electrode for a secondary battery according to claim 9, wherein at least part of the organic phosphorus compound is present in a form of particles having a particle diameter of 0. 1 µm or more and 5 µm or less in the positive electrode slurry.
